# EUROPÄISCHE PATENTSCHRIFT

(11) **EP 3 504 517 B1**
(45) Veröffentlichungstag und Bekanntmachung des Hinweises auf die Patenterteilung: **17.02.2021**
(21) Anmeldenummer: 17755142.1
(22) Anmeldetag: 15.08.2017
(51) Int. Cl.: G01D 11/30

(54) **MAGNET-BASIERTES DREHWINKELMESSSYSTEM**
MAGNET-BASED ANGULAR DISPLACEMENT MEASURING SYSTEM
SYSTÈME MAGNÉTIQUE DE MESURE D'ANGLE DE ROTATION

(30) Priorität: 23.08.2016 DE 102016115625
(43) Veröffentlichungstag der Anmeldung: 03.07.2019
(73) Patentinhaber: Fraba B.V., 6416 SG Heerlen (NL)
(72) Erfinder: LÖKEN, Michael, 52428 Jülich (DE); SANCHEZ GONZALEZ, Carmen Alejandro, 52074 Aachen (DE)
(74) Vertreter: terpatent Patentanwälte ter Smitten Eberlein-Van Hoof Rütten Daubert
(86) Internationale Anmeldenummer: PCT/EP2017/070665
(87) Internationale Veröffentlichungsnummer: WO 2018/036865

(56) Entgegenhaltungen:
- EP-A1- 2 851 656
- DE-A1- 3 433 060
- DE-A1- 19 913 262
- DE-A1-102004 007 445
- DE-A1-102008 008 278
- DE-A1-102011 084 411

## Beschreibung

Die Erfindung betrifft ein Magnet-basiertes Drehwinkelmesssystem zum Erfassen einer Drehbewegung einer Maschinenwelle, mit einer mit der Maschinenwelle, insbesondere an einem freien Ende der Maschinenwelle, drehfest verbundenen Erregereinheit, einer mit der Erregereinheit funktional zusammenwirkenden, feststehenden Sensoreinheit, und einem Drehgebergehäuse, das mit einer zylindrischen Umfangswand und einem, insbesondere der Maschinenwelle abgewandten, stirnseitigen Boden topförmig ausgebildet ist und zumindest die Sensoreinheit radial umgibt, und zumindest eine zusätzliche Öffnung aufweist, die mittels einer separaten Kappe verschließbar ist, derart, dass ein von dem Drehgebergehäuse umgebener Innenraum im Bereich der Sensoreinheit von außen zugänglich ist, wobei die Kappe zum Verschließen der Öffnung mittels einer Rastvorrichtung an dem Drehgebergehäuse wiederlösbar befestigbar ist.

Derartige Drehwinkelmesssysteme dienen zur Messung von Drehbewegungen einer Welle und werden vielfach auch als Drehwinkelsensor oder Drehgeber bezeichnet. Drehwinkelmesssysteme werden insbesondere zur Steuerung und Überwachung von Maschinen oder Antriebsmotoren eingesetzt, und können - auch nachträglich - an einer zu überwachenden Welle oder einem System angeordnet werden. Es sollte deutlich sein, dass unter der angesprochenen Maschinenwelle eine jede Art von Welle zu verstehen ist, insbesondere auch eine Antriebswelle eines Antriebsmotors. Eine besondere Rolle spielen kontaktfreie Drehwinkelmesssysteme, beispielsweise elektrisch oder magnetisch induzierte Systeme, da sie aufgrund der verschleissfreien Sensorik eine relativ lange Lebensdauer haben.

Bei Magnet-basierten Drehwinkelmesssystemen, insbesondere bei magnetischen Multiturn-Absolutwertgebern, umfasst die rotierende Erregereinheit üblicherweise zumindest einen Permanentmagneten und die feststehende Sensoreinheit zumindest einen Erfassungssensor, wie einen Hall- und/oder Wiegand-Sensor, sowie eine Auswerteelektronik zur Auswertung der erfassten Signale. Die Sensoreinheit ist zumeist auf einer Platine an dem axialen Ende der zu überwachenden Maschinenwelle angeordnet. Für eine elektrische Spannungsversorgung sowie zur Weiterleitung der Ausgangssignale der Sensoreinheit, beispielsweise an eine Motorsteuerung, ist üblicherweise ein Anschlusskabel vorgesehen, dessen elektrische Leitungen über eine Schnittstelle mit der Sensoreinheit verbunden sein können. Dazu ist das Anschlusskabel zumeist durch die zusätzlich an dem Drehgebergehäuse ausgebildete Öffnung von außen bis in das Drehgebergehäuse hinein geführt und an der in dem Drehgebergehäuse angeordneten Elektronikplatine bzw. an einer daran angeordneten Schnittstelle elektrisch gekuppelt.

Das Drehgebergehäuse umgibt üblicherweise sowohl die Sensoreinheit als auch die Erregereinheit und kann zur Befestigung zumindest der feststehenden Teile des Drehwinkelmesssystems an einem Maschinen- oder Motorgehäuse dienen. Dazu ist das Drehgebergehäuse vorteilhafterweise topförmig ausgebildet und kann mit der offenen axialen Seite über zumindest einen Teil des axialen Endes der Maschinenwelle geschoben und - beispielsweise über einen Befestigungsflansch - in relativ einfacher Weise an dem Maschinen- bzw. Motorgehäuse befestigt werden. Ein derartiger Drehgeber ist beispielsweise aus der DE 34 33 060 A1 bekannt. Ein großer Nachteil besteht hier jedoch darin, dass dieser nach Wartung neu kalibriert werden muss.

Zu Montage-, Justierungs- und Wartungsarbeiten kann die Öffnung zur Durchführung des Anschlusskabels derart groß ausgebildet sein, dass beispielsweise die Sensoreinheit, die Auswerteelektronik und/oder die Schnittstelle zum Anschließen des Anschlusskabels von außen zugänglich ist, ohne dass das Drehgebergehäuse von dem Maschinen- bzw. Motorgehäuse oder einem anderen Gegenflansch demontiert werden muss. Insbesondere kann zum Anschließen oder Trennen der elektrischen Verbindung das gesamte Drehwinkelmesssystem in dessen Position und Ausrichtung erhalten bleiben, so dass insbesondere ein erneutes Kalibrieren der Sensoreinheit gegenüber der Erregereinheit vermieden werden kann. Es sollte deutlich sein, dass vorliegend unter dem Begriff "verschließen" im Zusammenhang mit der Kappe und der Öffnung nicht nur ein vollständiges Verschließen, sondern auch ein Abdecken mit einem bereichsweise offenen Teil zum Durchführen des Anschlusskabels zu verstehen ist. Beispiele für derartige Drehgeber sind aus der DE 10 2011 084 411 A1 und der DE 10 2004 007 445 A1 bekannt. Die jeweilige Kappe mit dem befestigten Anschlusskabel ist hierbei jedoch jeweils mittels einer Schraube mit dem Gehäuse befestigt.

Aus der DE 10 2008 008 278 A1 ist beispielsweise ein Drehwinkelmesssystem mit einem Drehgebergehäuse bekannt, welches an einer axialen Seite einen offenen Bereich umfasst, in dem eine Schnittstelle eines Anschlusskabels angeordnet ist. Der offene Bereich kann von einem Deckel verschlossen werden, der auch mittels einer Abdeckschraube an dem Drehgebergehäuse befestigbar ist.

Nachteilig hierbei ist jedoch, dass ein Befestigen bzw. ein Lösen des Deckels an bzw. von dem Drehgebergehäuse relativ aufwendig ist, da hierzu insbesondere Werkzeug zum Drehen der Abdeckschraube erforderlich ist. Zudem ist in dem axialen Endbereich des Drehgebergehäuses ein relativ großer Freiraum erforderlich, um den Deckel aufsetzen bzw. abnehmen und/oder das Werkzeug ansetzen zu können. Darüber hinaus sind sowohl die Abdeckschraube als auch der Deckel separat ausgebildet und können - ebenso wie das Werkzeug - bei Wartungsarbeiten herunterfallen und/oder leicht verloren werden. Ein weiterer Nachteil ist die radiale Zuführung des Anschlusskabels, wodurch in dem radialen Umfangbereich des Drehgebergehäuses ein relativ großer Freiraum zum Einführen des Anschlusskabels erforderlich ist.

Aus der gattungsbildenden deutschen Offenlegungsschrift DE 199 13 262 A1 ist ein Drehwinkelmesssystem bekannt, die einen komplizierten, montageaufwendigen Aufbau aufweist, bei der ein das Anschlusskabel fixierender Halter montiert werden muss, der anschließend als Anschlussstück für die wiederlösbar befestigte Kappe dient.

Der Erfindung liegt daher die Aufgabe zugrunde, ein Drehwinkelmesssystem bereitzustellen, das besonders kompakt aufgebaut ist, in einen relativ kleinen Montageraum einsetzbar, und in einem montierten Zustand mit einem Anschlusskabel in relativ einfacher und komfortabler Weise verbindbar ist.

Die Lösung der Aufgabe erfolgt erfindungsgemäß durch ein Drehwinkelmesssystem mit den. Merkmalen des Anspruchs 1. Vorteilhafte Ausgestaltungen und Weiterbildungen der Erfindung sind in den Unteransprüchen, der Beschreibung sowie den Figuren aufgeführt.

Erfindungsgemäß weist die Kappe eine Fixiervorrichtung zum Fixieren des Anschlusskabels auf, wobei die Fixiervorrichtung ein elastisches Clip- oder Federelement zum Vorspannen des Anschlusskabels gegen die Umfangswand aufweist. Hierdurch wird ein besonders kompaktes, einfach zu montierendes Drehwinkelmesssystem bereit gestellt und zudem eine Zugentlastung des Anschlusskabels gewährleistet. Die Rastvorrichtung ist insbesondere als eine formschlüssige Befestigungseinrichtung zum Befestigen der Kappe an dem Drehgebergehäuse ausgebildet. Dazu kann die Rastvorrichtung separat ausgebildet oder in die Kappe und/oder das Drehgebergehäuse integriert sein. Beispielsweise umfasst die Rastvorrichtung zwei ineinandergreifende und wiederlösbare Form- bzw. Rastglieder. Dadurch kann die Kappe in besonders einfacher Weise, insbesondere ohne Werkzeug und/oder Hilfsmittel, an dem Drehgebergehäuse befestigt oder gelöst werden. Besonders bevorzugt ist die Rastvorrichtung derart ausgebildet, dass die lösbare Befestigung im Wesentlichen durch ein radial zu der Maschinenwelle ausgerichtetes Einschieben der Kappe erfolgen kann. Dadurch kann insbesondere an der axialen Stirnseite des Drehgebergehäuses eine Montage und ein erhöhter Platzbedarf zur Montage vermieden werden. Ferner kann die Kappe besonders klein ausgebildet sein, so dass auch die Öffnung an dem Drehgebergehäuse lediglich derart groß ausgebildet sein kann, wie es beispielsweise zur Durchführung des Anschlusskabels notwendig ist. Hierdurch können letztlich auch die Herstellungskosten relativ gering sein. Darüber hinaus kann durch eine solche Befestigungsart die Öffnung an jeder beliebigen Stelle des Drehgebergehäuses, insbesondere auch an der radialen Umfangswand, angeordnet sein, so dass - je nach Anforderung - eine geeignete Position für die Öffnung gewählt werden kann. Zur vereinfachten Bedienung der Rastvorrichtung ist die Öffnung besonders bevorzugt an dem Boden des Drehgebergehäuses exzentrisch zu der Maschinenwelle angeordnet. Ferner kann die Kappe zur Vermeidung eines Verlustes über ein flexibles Band oder einer Lasche an dem Drehgebergehäuse fixiert sein.

Die Fixiervorrichtung kann ein elastisches Clip- oder Federelement zum Vorspannen des Anschlusskabels aufweisen. Beispielsweise weist die Fixiervorrichtung eine Metallfeder bzw. ein Federblech auf, die das Anschlusskabel gegen das Drehgebergehäuse vorspannt. Die Metallfeder kann insbesondere separat und L-förmig ausgebildet sein, und mit einem ersten Schenkel in dem ersten Kappenbereich an der Kappe anliegen, einen Knick im Bereich des Kanalbogens aufweisen, und mit dem zweiten Schenkel an dem Anschlusskabel anliegen, um das Anschlusskabel radial zur Maschinenwelle gegen die Umfangswand des Drehgebergehäuses vorzuspannen. Dadurch kann das Anschlusskabel besonders komfortabel und sicher in dem Kanal fixiert werden. Ferner kann die Feder durch die Ausgestaltung als Metallfeder auch bei relativ hohen Temperaturen ihre Elastizität behalten, und ist zudem deutlich robuster sowie elektrisch leitfähig. Die Fixiervorrichtung kann ferner ein von der Kanalinnenwand der Kappe hervorstehendes Hakenelement bzw. einen Vorsprung aufweisen, mit dem eine axiale Bewegung des Anschlusskabels verhindert werden kann. Alternativ oder zusätzlich kann die Fixiereinrichtung eine Quetsch- oder Crimphülse aufweisen, in der das Anschlusskabel eingefasst ist. Dadurch kann beispielsweise eine elektrische Verbindung zwischen dem Anschlusskabel und der Fixiervorrichtung hergestellt sein.

Vorzugsweise weist die Rastvorrichtung zumindest ein an der Kappe angeordnetes erstes Rastglied und zumindest ein an dem Drehgebergehäuse angeordnetes und zu dem ersten Rastglied korrespondierendes zweites Rastglied auf, wobei das erste Rastglied mit dem zweiten Rastglied wiederlösbar kuppelbar ist. Insbesondere ist das erste Rastglied als eine Rastnase und das zweite Rastglied als eine Ausnehmung ausgebildet, in die die Rastnase in Eingriff bringbar ist. Das erste Rastglied ist vorteilhafterweise an einer Stirnseite der zumeist flächig ausgebildeten Kappe angeordnet und als ein von der Kappe lateral hervorstehender, elastischer Steg ausgebildet, der an einem freien Ende eine von dem Steg im Wesentlichen orthogonal hervorstehende Rastnase oder Rastvorsprung aufweist. Das zweite Rastglied kann eine zu der Rastnase korrespondierend angeordnete und ausgebildete Ausnehmung sein, in die die Rastnase im befestigten Zustand der Kappe an dem Drehgebergehäuse eingreift. Die Ausnehmung kann insbesondere in einem Randbereich der Öffnung angeordnet sein. Besonders bevorzugt weist die Kappe an drei Stirnseiten jeweils ein erstes Rastglied und das Drehgebergehäuse an drei zu der Öffnung zugewandten Stirnseiten jeweils ein zweites Rastglied auf. Zum Lösen der Kappe ist lediglich jeweils ein Drücken des elastischen Stegs und Herausschieben der Rastnase aus der Ausnehmung erforderlich, so dass die Kappe in relativ einfacher Weise und besonders sicher an dem Drehgebergehäuse befestigbar ist.

Besonders bevorzugt weist die Kappe zumindest ein erstes Führungsglied und das Drehgebergehäuse zumindest ein korrespondierendes zweites Führungsglied auf, wobei zum Befestigen oder Lösen der Kappe das erste Führungsglied an dem zweiten Führungsglied entlang gleitet. Das erste Führungsglied kann ein Abschnitt des ersten Rastglieds und das zweite Führungsglied ein Abschnitt des zweiten Rastglieds sein. Beispielsweise kann das erste Führungsglied der flächige Steg des ersten Rastglieds und das zweite Führungsglied der flächige Seitenbereich des zweiten Rastglieds sein. Die flächigen Führungsglieder sind bevorzugt parallel zu einer flächigen Außenkontur der Kappe ausgebildet und können als Gleit- und Führungsflächen zum Ausrichten insbesondere des ersten Rastglieds gegenüber dem zweiten Rastglied dienen. Dadurch kann die Kappe mit den ersten Führungsgliedern, beispielsweise in axialer Richtung der Maschinenwelle, auf die an der Öffnung des Drehgebergehäuses angeordneten zweiten Führungsglieder flächig aufgesetzt und sodann parallel zu der flächigen Außenkontur der Kappe entlang der Führungsglieder, insbesondere radial auf die Maschinenwelle zu, verschoben werden, insbesondere solange bis das erste Rastglied in das korrespondierende zweite Rastglied eingerastet ist, bzw. bis sämtliche ersten Rastglieder jeweils in ein korrespondierendes zweites Rastglied eingerastet sind. Dadurch kann die Kappe in besonders einfacher und sicherer Weise an dem Drehgebergehäuse ausgerichtet und daran fixiert werden.

Vorzugsweise ist die Kappe in einem an dem Drehgebergehäuse befestigten Zustand mit zumindest einem Bereich bündig zu der Umfangswand und/oder zu dem Boden angeordnet. Insbesondere kann die Kappe zumindest teilweise in die Öffnung eingesetzt sein, so dass eine Außenfläche der Kappe in der Ebene einer Außenfläche des Drehgebergehäuses angeordnet ist, insbesondere der Außenfläche des Bodens oder der Umfangswand. Dadurch steht die Kappe an der Seitenfläche des Drehgebergehäuses nicht nach außen hervor, sondern ist in das Drehgebergehäuse integriert. Durch diese Anordnung kann an dem Übergang von dem Drehgebergehäuse zu der Kappe insbesondere ein Absatz bzw. Vorsprung und hiermit einhergehend eine Vergrößerung des Drehgebergehäuses und des erforderlichen Montageraums vermieden werden. Das Drehwinkelmesssystem kann insbesondere besonders kompakt aufgebaut sein.

Vorzugsweise weist die Kappe einen im Wesentlichen flächigen ersten Kappenbereich und einen im Wesentlichen kastenförmigen zweiten Kappenbereich auf. Der erste Kappenbereich kann beispielsweise den zuvor beschriebenen, in der Ebene einer Drehgeber-Seitenwand, wie des Bodens, angeordneten flächigen Bereich der Kappe betreffen. Der zweite Kappenbereich ist bevorzugt an einer Stirnseite des ersten Kappenbereichs angeordnet, so dass der zweite Kappenbereich von dem ersten Kappenbereich seitlich hervorsteht. Insbesondere kann sich die Kappe mit dem ersten Kappenbereich radial zu der Maschinenwelle und mit dem zweiten Kappenbereich axial zu der Maschinenwelle erstrecken. Der zweite Kappenbereich ist insbesondere kasten- bzw. gehäuseförmig ausgebildet und kann mit zumindest drei Seitenwänden einen Raum aufspannen. Dadurch kann der zweite Abschnitt beispielsweise als ein Griff zum Halten oder Schieben der Kappe dienen. Hierzu können an einer Außenseite der Kappe in dem zweiten Kappenbereich Riefen bzw. Rillen zum rutschfesten Greifen angeordnet sein. Dadurch kann die Kappe an dem Drehgeber besonders genau und sicher positioniert und befestigt werden, insbesondere ohne zusätzliches Werkzeug.

Der zweite Kappenbereich steht im befestigten Zustand der Kappe an dem Drehgebergehäuse bevorzugt von der Umfangswand und/oder von dem Boden des Drehgebergehäuses radial hervor. Insbesondere kann die Kappe in dem ersten Kappenbereich mit dem Boden des Drehgebergehäuses bündig angeordnet sein und mit dem zweiten Kappenbereich von der zylindrischen Seitenwand radial hervorstehen. Dadurch lässt sich die Kappe mit dem zweiten Kappenbereich besonders gut greifen und kann somit in besonders einfacher Weise von Hand an dem Drehgebergehäuse befestigt oder davon gelöst werden.

Der zweite Kappenbereich kann im befestigten Zustand der Kappe an dem Drehgebergehäuse die Umfangswand des Drehgebergehäuses zumindest teilweise radial umgeben. Die Kappe kann insbesondere an der Umfangwand des Drehgebergehäuses zumindest in einem Bereich radial anliegen und dadurch besonders stabil an dem Drehgebergehäuse befestigt sein. Ferner kann die Kappe - beispielsweise bei Anordnung der Öffnung an der Umfangswand des Drehgebergehäuses - mit dem zweiten Kappenbereich die Öffnung des Drehgebers radial umgeben und verschließen.

Besonders bevorzugt weist die Kappe in dem zweiten Kappenbereich einen Kanal auf, durch den sich das Anschlusskabel von einem von dem Drehgebergehäuse umgebenden Innenraum bis zu einer außerhalb des Drehgebergehäuses befindlichen Umgebung erstreckt. Der Kanal kann zumindest teilweise durch die kastenförmige Kontur ausgebildet sein. Insbesondere kann der Kanal zwischen zumindest einer durch die kastenförmige Kontur des zweiten Kappenbereichs aufgespannten und zu dem Drehgebergehäuse zugewandten Innenwandfläche der Kappe und der Außenwandfläche der Umfangswand des Drehgebergehäuses ausgebildet sein. Vorteilhafterweise ist der Kanal L-förmig ausgebildet und erstreckt sich mit einem ersten geraden Abschnitt parallel zu der Maschinenwelle entlang der Außenfläche der Umfangswand des Drehgebergehäuses in Richtung des Bodens, weist im Bereich des Bodens einen Knick oder Bogen um etwa 90° in Richtung des Innenraums des Drehgebergehäuses auf, und erstreckt sich weiter radial bis in den Innenraum. In dem Bereich des Kanals ist zumindest teilweise die Öffnung des Drehgebergehäuses ausgebildet, so dass das Anschlusskabel in besonders einfacher Weise von außen in den Innenraum des Drehgebergehäuses geführt sein kann. Insbesondere kann das Anschlusskabel umgebungsseitig axial in den Kanal eingeführt sein und innenraumseitig radial in den Innenraum münden, ohne dass ein erhöhter Platzbedarf notwendig ist. Durch diese Anordnung kann das Drehwinkelmesssystem besonders kompakt aufgebaut sein. Vorteilhafterweise ist der Kanal über dessen gesamte Erstreckung einseitig offen ausgebildet, insbesondere auf der zu der Umfangswand des Drehgebergehäuses angeordneten Seite. Dadurch kann das in dem Kanal angeordnete Anschlusskabel mit einer Seite an der Umfangswand des Drehgebergehäuses und mit einer gegenüberliegenden Seite an der Innenwand der Kappe anliegen. Somit ist eine Führung des Anschlusskabels in das Drehgebergehäuse sowie ein besonders effektives Verdecken bzw. Verschließen der Drehgebergehäuse-Öffnung, insbesondere mittels der Fixiervorrichtung an zumindest einer zu dem Drehgebergehäuse zugewandten Seite der Kappe, ermöglicht.

Die Fixiervorrichtung kann insbesondere in dem im zweiten Kappenbereich ausgebildeten Kanal angeordnet sein.

Vorzugsweise ist die Fixiervorrichtung aus einem elektrisch leitfähigen Material ausgebildet, so dass in einem befestigten Zustand der Kappe an dem Drehgebergehäuse zwischen einer elektrischen Leitung des Anschlusskabels und dem Drehgebergehäuse über die Fixiervorrichtung eine elektrische Verbindung hergestellt ist. Insbesondere kann zumindest eine elektrische Zuleitung des Anschlusskabels, wie ein Kabelmantelschirm, für eine elektrische Kupplung radial außen an dem Drehgebergehäuse anliegen. Die Fixierung des Kabelmantelschirms an dem Drehgebergehäuse kann beispielsweise mittels des Federelements erfolgen. Dadurch kann eine direkte elektrische Verbindung zwischen dem Kabelmantelschirm und dem Drehgebergehäuse hergestellt sein, so dass beispielsweise die Erdung des Drehgebergehäuses in relativ einfacher Weise über den Kabelmantelschirm erfolgen kann. Alternativ oder zusätzlich kann eine elektrische Kupplung über die Fixiervorrichtung erfolgen. Dazu kann die elektrische Verbindung beispielsweise über eine als Crimphülse ausgebildete Fixiereinrichtung erfolgen. Die Fixiervorrichtung bzw. ein elektrisch leitfähiges Federelement kann wiederum mit dem Drehgebergehäuse elektrisch verbunden sein. Durch diese Anordnung kann insbesondere an der Elektronikplatine zumindest eine Anschlussklemme zum Anschließen der elektrischen Leitung und folglich ein dazu erforderliche Bau- und Montageraum eingespart werden.

Vorzugsweise ist die Öffnung ausschließlich exzentrisch an zumindest einer der Maschinenwelle abgewandten, axialen Boden-Stirnseiten des Drehgebergehäuses ausgebildet und erstreckt sich über eine der Maschinenwelle abgewandte umlaufende Kante des Drehgebergehäuses bis in einen radialen Umfangsbereich des Drehgebergehäuses. Dadurch können das Anschlusskabel bzw. die einzelnen elektrischen Leitungen des Anschlusskabels durch die an der Kante ausgebildete Öffnung insbesondere radial zu der Maschinenwelle in den Innenraum des Drehgebergehäuses geführt sein. Dadurch ergibt sich in den elektrischen Leitungen ein Bogen, der zur Zugentlastung unterstützend wirken kann. Ferner kann die Kappe bündig mit der Außenkontur der Stirnseitenfläche an dem Drehgebergehäuse angeordnet sein.

Nachfolgend wird die Erfindung anhand einer bevorzugten Ausführungsform unter Bezugnahme auf die anliegenden Zeichnungen näher erläutert. Es zeigen schematisch
Figur 1 ein erfindungsgemäßes Drehwinkelmesssystem mit herausgenommener Kappe in perspektivischer Darstellung, und
Figur 2 das Drehwinkelmesssystem mit eingesetzter Kappe in geschnittener Darstellung.

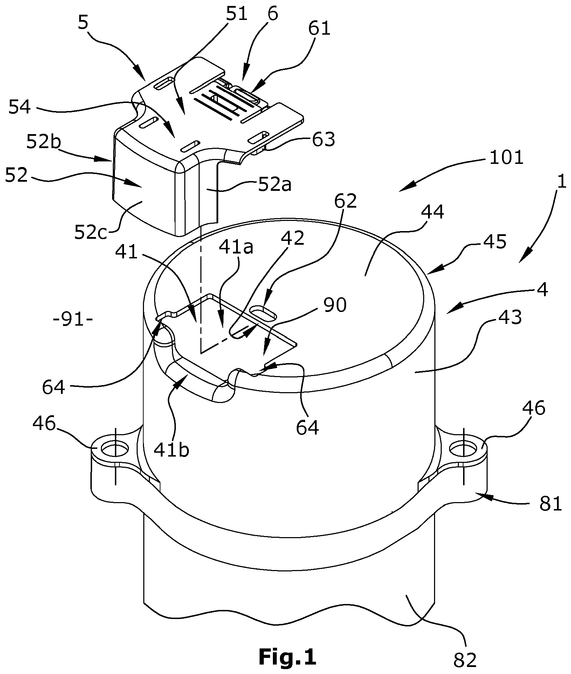

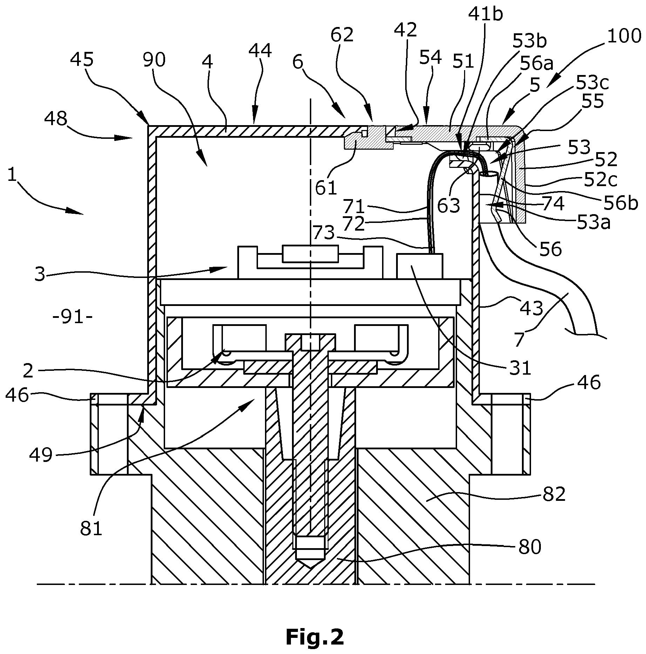

In den Figuren 1 und 2 ist jeweils ein Magnet-basiertes Drehwinkelmesssystem 1 gezeigt, das an einem axialen Ende 81 einer Maschinenwelle 80 angeordnet ist und zum Erfassen einer Drehbewegung der Maschinenwelle 80 eine mit der Maschinenwelle 80 drehfest verbundene Erregereinheit 2, eine mit der Erregereinheit 2 funktional zusammenwirkende, feststehende Sensoreinheit 3, und ein zumindest die Sensoreinheit 3 radial umgebendes Drehgebergehäuse 4 aufweist.

Das Drehgebergehäuse 4 ist topfförmig ausgebildet und weist eine zylindrische Umfangswand 43 und einen axialen Boden 44 auf. Der Boden 44 ist an der zur Maschinenwelle 80 abgewandten Stirnseite des Drehgebergehäuses 4 angeordnet, so dass das Drehgebergehäuse 4 - voreilhafterweise gemeinsam mit der Sensoreinheit 3 - axial auf die Maschinenwelle 80 bzw. auf ein die Maschinenwelle 80 umgebendes, nicht näher dargestelltes Gehäuse 82, insbesondere ein Motorgehäuse, aufgesetzt werden kann. Zur Befestigung des Drehgebergehäuses 4 an dem Motorgehäuse 82 sind an dem Drehgebergehäuse 4 vorliegend zwei von der Umfangswand 43 radial hervorstehende Flansche 46 ausgebildet, an denen jeweils eine Bohrung für eine nicht dargestellte Befestigungsschraube zum Befestigen des Drehgebergehäuses 4 an dem Motorgehäuse 82 angeordnet ist.

An dem Boden 44 des Drehgebergehäuses 4 ist eine Öffnung 41 ausgebildet, durch die ein von dem Drehgebergehäuse 4 umgebener Innenraum 90 im Bereich der Sensoreinheit 3 von außen zugänglich ist. Die Öffnung 41 ist exzentrisch an dem Boden 44 ausgebildet und erstreckt sich über eine zwischen dem Boden 44 und der Umfangswand 43 ausgebildete umlaufende Kante 45 bis in einen Bereich der Umfangswand 43. Dadurch weist die Öffnung 41 sowohl einen axialen Öffnungsteil 41a als auch einen radialen Öffnungsteil 41b auf. Durch eine solche Ausgestaltung der Öffnung 41 ist die Sensoreinheit 3 in besonders komfortabler Weise zugänglich.

Die Öffnung kann mittels einer Kappe 5 zumindest teilweise verschlossen werden. Dazu weist die Kappe 5 eine zu der Öffnung 41 korrespondierende Form auf, insbesondere einen im Wesentlichen flächigen ersten Kappenbereich 51 und einen im Wesentlichen kastenförmigen zweiten Kappenbereich 52. Dadurch kann die Kappe 5 mit dem ersten Kappenbereich 51 den axialen Öffnungsteil 41a und mit dem zweiten Kappenbereich 52 den radialen Öffnungsteil 41b verschließen. In der Figur 1 ist die Kappe 5 in einem gelösten bzw. herausgenommenen Zustand 101 gezeigt, wobei die Kappe 5 gemäß der gestrichelten Linie zum Verschließen der Öffnung 41 auf das Drehgebergehäuse 4 aufgesetzt und in eine Rastposition verschoben werden kann, bzw. zum Lösen in umgekehrter Reihenfolge herausgenommen werden kann. Der Zustand 100, in dem die Kappe 5 zum Verschließen der Öffnung 41 an dem Drehgebergehäuse 4 befestigt ist, ist in Figur 2 gezeigt.

In dem ersten Kappenbereich 51 ist die Kappe 5 plattenförmig ausgebildet, und ist im befestigten Zustand 100 der Kappe 5 an dem Drehgebergehäuse 4 derart angeordnet, dass eine Außenfläche 54 der Kappe 5 in der Ebene einer Außenfläche des Bodens 44 des Drehgebergehäuses 4 angeordnet ist. Insbesondere kann die Kappe 5 axial in die Öffnung 41 eingesetzt sein, so dass die Kappe 5 an der Stirnseitenfläche 44 des Drehgebergehäuses 4 axial nicht hervorsteht, sondern in das Drehgebergehäuse 4 integriert ist.

Der zweite Kappenbereich 52 ist als ein gehäuseförmiges Kappenelement ausgebildet, das zumindest teilweise einen Raum umgibt und in seiner zur Maschinenwelle 80 axialen sowie umfangsseitigen Erstreckung größer ausgebildet ist als der radiale Öffnungsteil 41b, so dass der radiale Öffnungsteil 41b von dem Kappenelement 52 vollständig umgeben und abgedeckt werden kann. Im befestigten Zustand 100 liegt die Kappe 5 mit dem zweiten Kappenbereich 52, insbesondere mit zwei Seitenwänden 52a, 52b, die jeweils im Wesentlichen senkrecht zu der Umfangswand 43 angeordnet sind, mit einer Stirnseite an der Umfangswand 43 bündig an. Dadurch ist der Öffnungsteil 41b zumindest in diesem Seitenbereich vollständig verschlossen. Eine die beiden anliegenden Seitenwände 52a, 52b verbindende Außenseitenwand 52c des Kappenelements 52 ist korrespondierend zu der Umfangswand 43 gekrümmt und umgibt die Umfangswand 43 zumindest teilweise radial. Durch die radiale Beabstandung der Außenseitenwand 52c der Kappe 5 von der Umfangswand 43 des Drehgebergehäuses 4, bildet die Kappe 5 im befestigten Zustand 100 zwischen der Umfangswand 43 und den Seitenwänden 52a, 52b, 52c der Kappe 5 einen Kanal 53. Insbesondere ist der Kanal 53 im befestigten Zustand 100 zwischen einer Außenfläche der Umfangswand 43 und einer Innenfläche der Seitenwände 52a, 52b, 52c ausgebildet.

Der Kanal 53 ist L-förmig ausgebildet und erstreckt sich von einer an einem freien Ende des zweiten Kappenbereichs 52 mit einer Umgebung 91 des Drehgebergehäuses 4 verbundenen axialen ersten Kanalöffnung bis zu einer mit dem Innenraum 90 des Drehgebergehäuses 4 verbundenen radialen zweiten Kanalöffnung. Insbesondere erstreckt sich der Kanal 53 mit einem ersten Kanalabschnitt 53a entlang der Umfangswand 43 des Drehgebergehäuses 4 parallel zu der Maschinenwelle 80 in Richtung des Bodens 44 des Drehgebergehäuses 4 und weist etwa in Höhe des Bodens 44 einen Bogen 53c um etwa 90° in Richtung des Innenraums 90 des Drehgebergehäuses 4 auf. In diesem Bereich ist auch der an dem Drehgebergehäuse 4 ausgebildete radiale Öffnungsbereich 41b an der radialen Umfangswand 43 des Drehgebergehäuses 4 ausgebildet, so dass der Kanal 53 in den Innenraum 90 mündet.

In dem Kanal 53 ist, wie in Figur 2 dargestellt, ein Anschlusskabel 7 mit elektrischen Leitungen 71, 72 ,73 angeordnet. Das Anschlusskabel 7 dient insbesondere einer elektrischen Verbindung der Sensoreinheit 3, insbesondere der Auswerteelektronik, mit einer externen Stromversorgung und/oder mit einem externen Peripheriegerät, welches nicht dargestellt ist. Das Anschlusskabel 7 erstreckt sich axial in den ersten Kanalabschnitt 53a, und ist ab dem Bereich des Bogens 53c abisoliert, so dass nur noch die einzelnen Leitungen 71, 72, 73 in einem Bogen in den Innenraum 90 geführt und darin an der Sensoreinheit 3 angeschlossen sind. Dazu ist an der Sensoreinheit 3 eine Schnittstelle bzw. Anschlussklemme 31 zum Anschließen des Anschlusskabels 7 bzw. der elektrischen Leitungen 71, 72 , 73 des Anschlusskabels 7 vorgesehen.

Durch die unter Ausbildung des Kanals 53 zum Drehgebergehäuse 4 zugewandte offene Längsseite der Kappe 5 liegt das Anschlusskabel 7 in dem ersten Kanalabschnitt 53a radial außen an der Umfangswand 43 des Drehgebergehäuses 4 an. In diesem Bereich ist eine zusätzliche elektrische Verbindung zwischen einer Kabelmantelleitung bzw. einem Kabelmantelschirm 74 des Anschlusskabels 7 und dem Drehgebergehäuse 4 vorgesehen. Dadurch kann eine elektrische Verbindung zwischen dem Kabelmantelschirm und 74 dem Drehgebergehäuse 4 hergestellt sein, so dass eine Erdung des Kabelmantelschirms 74 in relativ einfacher Weise über das Drehgebergehäuse 4 und letztlich über das Motorgehäuse 82, an dem das Drehgebergehäuse 4 anliegt, erfolgen kann. Die elektrische Verbindung zwischen dem Kabelmantelschirm 74 und dem Drehgebergehäuse erfolgt über eine Fixiervorrichtung 55, die eine elektrische Verbindung ermöglicht. Dazu kann eine an sich bekannte und vorliegend nicht näher dargestellte Einrichtung vorgesehen sein, beispielsweise eine Crimphülse. Dadurch kann an der Schnittstelle 31 der Elektronikplatine zu dem Anschlusskabel 7 eine Anschlussklemme und folglich ein dazu erforderliche Bauraum eingespart werden.

Zur Fixierung des Anschlusskabels 7 in dem Kanal 53 sowie zur Unterstützung einer elektrischen Verbindung zwischen dem Anschlusskabel 7 und dem Drehgebergehäuse 4 weist die Kappe 5 in dem zweiten Kappenbereich 52 die Fixiervorrichtung 55 auf. Die Fixiervorrichtung 55 dient insbesondere zur Zugentlastung des Kabels 7. Die Fixiervorrichtung 55 ist vorliegend als ein von der Innenwand der Kappe 5 hervorstehendes, L-förmiges elastisches Federelement 56 zum Vorspannen des Anschlusskabels 7 gegen die Umfangswand 43 ausgebildet. Das Federelement 56 ist bevorzugt elektrisch leitfähig ausgebildet und erstreckt sich von dem ersten Kappenbereich 51 bis in den zweiten Kappenbereich 52, wobei das Federelement 56 mit einem ersten Schenkel 56a an dem flächigen ersten Kappenbereich 51 und mit einem zweiten Schenkel 56b an dem Anschlusskabel 7 anliegt. Dadurch kann das Anschlusskabel 7 besonders sicher in dem Kanal 53 fixiert werden. Ferner liegt der erste Schenkel 56a mit einem freien Ende, insbesondere im Bereich der Kante 42, an dem Drehgebergehäuse 4 an, so dass eine elektrische Verbindung zwischen zumindest dem Drehgebergehäuse 4 und dem Federelement 56, vorzugsweise zusätzlich noch über den zweiten Schenkel 56b mit der Zuleitung 74, bestehen kann. Dadurch kann eine Erdung der Zuleitung 74 über das Federelement 56, das Drehgebergehäuse 4 und letztlich über das Motorgehäuse 82 erfolgen.

Zur wiederlösbaren Befestigung der Kappe 5 an dem Drehgebergehäuse 4, ist eine Rastvorrichtung 6 vorgesehen. Die Rastvorrichtung 6 ist als eine formschlüssige Befestigungseinrichtung ausgebildet und dadurch geeignet, die Kappe 5 ohne separates Werkzeug und/oder Hilfsmittel an dem Drehgebergehäuse 4 zu befestigen bzw. zu lösen. Dazu umfasst die Rastvorrichtung 6 zumindest ein an der Kappe 5 angeordnetes erstes Rastglied 61 und zumindest ein an dem Drehgebergehäuse 4 angeordnetes und zu dem ersten Rastglied 61 korrespondierend ausgebildetes zweites Rastglied 62, wobei das erste Rastglied 61 mit dem zweiten Rastglied 62 wiederlösbar kuppelbar ist.

Das erste Rastglied 61 ist - wie insbesondere in Figur 1 erkennbar - an einer Stirnseite der Kappe 5 in dem ersten Kappenbereich 51 angeordnet und als ein von einer Stirnseite hervorstehender biegbarer bzw. elastischer Flachsteg mit einer von dem Flachsteg senkrecht hervorstehenden Rastnase ausgebildet. Zur verbesserten Handhabung, insbesondere zum Drücken des Flachstegs beim Lösen der Kappe 5 von dem Drehgebergehäuse 4, sind an der Außenseite des Stegs Riefen angeordnet. Das erste Rastglied 61 kann an dem Flachsteg einen Abschnitt zum Ausrichten und Führen der Kappe 5 gegenüber dem Drehgebergehäuse 4 aufweisen, beispielsweise einen seitlichen Abschnitt des Flachstegs, der an einer Innenfläche des Bodens 44 entlang gleitet.

Das zweite Rastglied 62 ist an dem Drehgebergehäuse 4 im Bereich einer die Öffnung 41 umgebenden Rahmenkante 42 angeordnet und als eine zu der Rastnase 61 korrespondierende Ausnehmung ausgebildet. Die benachbart zu den Rastgliedern 61, 62 ausgebildeten Flächen dienen als Gleit- und Führungsflächen zum Ausrichten des ersten Rastglieds 61 gegenüber dem zweiten Rastglied 62 bzw. der Kappe 5 gegenüber dem Drehgebergehäuse 4. Dadurch kann die Kappe 5 beim Einsetzen auf die Öffnung 41 und Einschieben des ersten Rastglieds 61 in das zweite Rastglied 62 in besonders einfacher Weise ausgerichtet und die Öffnung 41 in besonders einfacher Weise geöffnet bzw. verschlossen werden.

Zusätzlich sind an der Kappe 5 zwei erste Führungsglieder 63 angeordnet, die jeweils als ein lateral von der Kappe 5 hervorstehender Stift ausgebildet sind und als eine zusätzliche Führung bzw. Fixierung der Kappe 5 an dem Drehgebergehäuse 4 dienen. An den Stiften 63 können jeweils weitere Führungsglieder, beispielsweise ein Schienenabschnitt zum Entlanggleiten der Kappe 5 parallel zu dem Boden 44 vorgesehen sein. Korrespondierend zu den ersten Führungsgliedern 63 ist an dem Drehgebergehäuse 4 im Bereich der Öffnung 41 jeweils ein zweites Führungsglied 64 angeordnet, welches vorliegend jeweils in Form einer Aussparung zur Aufnahme des Stiftes 63 als Gegenführung ausgebildet ist. Dadurch kann die Kappe 5 besonders effektiv an dem Drehgebergehäuse 4 fixiert sein. Auch die zweiten Führungsgliedern 64 können jeweils eine zu dem ersten Führungsglied 63 korrespondierende Gegenschiene zum Entlanggleiten aufweisen. Um einen Verlust der Kappe 5 bei der Montage oder Demontage zu vermeiden, kann die Kappe 5 zusätzlich über eine Lasche, ein Halteband oder Dergleichen mit dem Drehgebergehäuse 4 verbunden sein, was in den Figuren nicht dargestellt ist.

Zum Befestigen der Kappe 5 an dem Drehgebergehäuse 4 wird - wie in Figur 1 durch die gestrichelte Linie gezeigt - die Kappe 5 von außen in im Wesentlichen axialer Richtung der Maschinenwelle 80 in die Öffnung 41 eingesetzt, wobei die Kappe 5 zunächst mit dem ersten Kappenbereich 51, insbesondere mit dem Flachsteg 61, im Bereich der Ausnehmung 62 unter eine Rahmenkante 42 des Drehgebergehäuses 4 geführt wird, und die Kappe 5 sodann mit dem zweiten Kappenbereich 52 in Richtung des Bodens 44 des Drehgebergehäuse 4 gedrückt und eingedreht bzw. eingeschoben wird, so dass unter gleichzeitigem Einrasten des ersten Rastglieds 61 in das zweite Rastglied 62 die Stifte 63 jeweils in die Aussparung 64 eingreifen und die Kappe 5 gemeinsam mit der Rastvorrichtung 6 fixieren.

Zum Lösen der Kappe 5 von dem Drehgebergehäuse 4 wird die Kappe 5 unter gleichzeitigem Eindrücken des Flachstegs 61 zum Lösen des ersten Rastglieds 61 aus dem zweiten Rastglied 62 der zweite Kappenbereich 52 in Richtung der axialen Stirnseite 44 und von dem Drehgebergehäuse 4 weg gedrückt, so dass die Kappe 5 aus den zweiten Fixierpunkten 62, 64 und aus der Öffnung 41 herausgedreht wird.

Es sollte deutlich sein, dass der Hauptanspruch nicht auf das beschriebene Ausführungsbeispiel begrenzt ist. Insbesondere eine Anpassung des Kanalabschnitts sowie der Lage und Ausführung der einzelnen Rast- und/oder Führungsglieder sind für den Fachmann selbstverständlich. Entsprechend können sowohl mehr als auch weniger Rast- und Führungsglieder in unterschiedlichen Varianten vorgesehen sein.

### Bezugszeichenliste

- 1: Drehwinkelmesssystem
- 2: Erregereinheit
- 3: Sensoreinheit
- 31: Schnittstelle, Anschlussklemme
- 4: Drehgebergehäuse
- 41: Öffnung
- 41a: axialer Öffnungsbereich
- 41b: radialer Öffnungsbereich
- 42: Rahmenkante
- 43: Umfangswand
- 44: Boden, Stirnseitenfläche
- 45: Kante
- 46: Flansch
- 5: Kappe
- 51: erster Kappenbereich
- 52: zweiter Kappenbereich
- 52a: Seitenwand
- 52b: Seitenwand
- 52c: Seitenwand
- 53: Kanal
- 53a: erster Kanalabschnitt
- 53b: zweiter Kanalabschnitt
- 53c: Bogen
- 54: Außenfläche
- 55: Fixiervorrichtung
- 56: Clip- / Federelement
- 56a: erster Schenkel
- 56b: zweiter Schenkel
- 6: Rastvorrichtung
- 61: erstes Rastglied
- 62: zweites Rastglied
- 63: erstes Führungsglied
- 64: zweites Führungsglied
- 7: Anschlusskabel
- 71: Zuleitung
- 72: Zuleitung
- 73: Zuleitung
- 74: Zuleitung, Kabelmantelschirm
- 80: Maschinenwelle
- 81: axiales Ende, Seitenbereich
- 82: Motorgehäuse
- 90: Innenraum
- 91: Umgebung
- 100: befestigter Zustand
- 101: gelöster Zustand

## Patentansprüche

1. Magnet-basiertes Drehwinkelmesssystem (1) zum Erfassen einer Drehbewegung einer Maschinenwelle (80), mit
einer mit der Maschinenwelle (80) drehfest verbundenen Erregereinheit (2),
einer mit der Erregereinheit (2) funktional zusammenwirkenden, feststehenden Sensoreinheit (3), und
einem Drehgebergehäuse (4), das mit einer zylindrischen Umfangswand (43) und einem stirnseitigen Boden (44) topfförmig ausgebildet ist und zumindest die Sensoreinheit (3) radial umgibt, wobei das Drehgebergehäuse (4) eine zusätzliche Öffnung (41) aufweist, die mittels einer separaten Kappe (5) verschließbar ist, derart, dass ein von dem Drehgebergehäuse (4) umgebener Innenraum (90) im Bereich der Sensoreinheit (3) von außen zugänglich ist,
wobei die Kappe (5) zum Verschließen der Öffnung (41) mittels einer Rastvorrichtung (6) an dem Drehgebergehäuse (4) wiederlösbar befestigbar ist,
**dadurch gekennzeichnet, dass**
die Kappe (5) eine Fixiervorrichtung (55) zum Fixieren eines Anschlusskabels (7) aufweist, wobei die Fixiervorrichtung (55) ein elastisches Clip- oder Federelement (56) zum Vorspannen des Anschlusskabels (7) gegen die Umfangswand (43) aufweist.

2. Drehwinkelmesssystem nach Anspruch 1, **dadurch gekennzeichnet, dass**
die Rastvorrichtung (6) zumindest ein an der Kappe (5) angeordnetes erstes Rastglied (61) und zumindest ein an dem Drehgebergehäuse (4) angeordnetes zweites Rastglied (62) aufweist, und das erste Rastglied (61) mit dem zweiten Rastglied (62) wiederlösbar kuppelbar ist.

3. Drehwinkelmesssystem nach einem der Ansprüche 1 oder 2, **dadurch gekennzeichnet, dass**
die Kappe (5) zumindest ein erstes Führungsglied (63) und das Drehgebergehäuse (4) zumindest ein korrespondierendes zweites Führungsglied (64) aufweist, wobei zum Befestigen oder Lösen der Kappe (5) das erste Führungsglied (63) an dem zweiten Führungsglied (64) parallel entlang gleitet.

4. Drehwinkelmesssystem nach einem der voranstehenden Ansprüche, **dadurch gekennzeichnet, dass**
die Kappe (5) in einem an dem Drehgebergehäuse (4) befestigten Zustand (100) mit zumindest einem Bereich (51) bündig zu der Umfangswand (43) und/oder zu dem Boden (44) angeordnet ist.

5. Drehwinkelmesssystem nach einem der voranstehenden Ansprüche, **dadurch gekennzeichnet, dass**
die Kappe (5) einen im Wesentlichen flächigen ersten Kappenbereich (51) und einen im Wesentlichen kastenförmigen zweiten Kappenbereich (52) aufweist.

6. Drehwinkelmesssystem nach Anspruch 5, **dadurch gekennzeichnet, dass**
die Kappe (5) in einem an dem Drehgebergehäuse (4) befestigten Zustand (100) mit dem zweiten Kappenbereich (52) von der Umfangswand (43) und/oder von dem Boden (44) lateral hervorsteht.

7. Drehwinkelmesssystem nach einem der Ansprüche 5 oder 6, **dadurch gekennzeichnet, dass**
die Kappe (5) in einem an dem Drehgebergehäuse (4) befestigten Zustand (100) mit dem zweiten Kappenbereich (52) die Umfangswand (43) zumindest teilweise radial umgibt,

8. Drehwinkelmesssystem nach einem der Ansprüche 5 bis 7, **dadurch gekennzeichnet, dass**
die Kappe (5) in einem an dem Drehgebergehäuse (4) befestigten Zustand (100) in dem zweiten Kappenbereich (52) einen Kanal (53) aufweist, durch den sich ein Anschlusskabel (7) von einem von dem Drehgebergehäuse (4) umgebenden Innenraum (90) bis zu einer außerhalb des Drehgebergehäuses (4) befindlichen Umgebung (91) erstreckt.

9. Drehwinkelmesssystem nach einem der voranstehenden Ansprüche, **dadurch gekennzeichnet, dass**
die Fixiervorrichtung (55) aus einem elektrisch leitfähigen Material ausgebildet ist und in einem befestigten Zustand (100) der Kappe (5) an dem Drehgebergehäuse (4) über die Fixiervorrichtung (55) eine elektrische Verbindung zwischen einer elektrischen Leitung (71, 72, 73, 74) des Anschlusskabels (7) und dem Drehgebergehäuse (4) hergestellt ist.

10. Drehwinkelmesssystem nach einem der voranstehenden Ansprüche, **dadurch gekennzeichnet, dass**
die Öffnung (41) exzentrisch an zumindest einer der Maschinenwelle (80) abgewandten, axialen Boden-Stirnseiten (44) des Drehgebergehäuses (4) ausgebildet ist und sich über eine der Maschinenwelle (80) abgewandte umlaufende Kante (45) des Drehgebergehäuses (4) bis in einen radialen Umfangsbereich (43) des Drehgebergehäuses (4) erstreckt.

## Claims

1. Magnet-based rotation angle measuring system (1) for sensing a rotary movement of a machine shaft (80), comprising
an exciter unit (2) connected in a rotationally fixed manner to the machine shaft (80),
a stationary sensor unit (3) functionally cooperating with the stationary exciter unit (2), and
a rotary encoder housing (4) which is pot-shaped with a cylindrical peripheral wall (43) and an end base (44) and surrounds at least the sensor unit (3) radially, the rotary encoder housing (4) having an additional opening (41) adapted to be closed by means of a separate cap (5) such that an interior space (90) enclosed by the rotary encoder housing (4) is accessible from outside in the region of the sensor unit (3),
for closing the opening (41), the cap (5) can be releasably fastened to the rotary encoder housing (4) by means of a locking device (6),
**characterized in that**
the cap (5) comprises a fixing device (55) for fixing a connection cable (7), the fixing device (55) comprising an elastic clip or spring element (56) for pre-tensioning the connecting cable (7) against the peripheral wall (43).

2. Rotation angle measuring system according to claim 1, **characterized in that** the locking device (6) comprises at least one first locking member (61) arranged on the cap (5) and at least one second locking member (62) arranged on the rotary encoder housing (4), and that the first locking member (61) can be releasably coupled with the second locking member (62).

3. Rotation angle measuring system according to one of claims 1 or 2, **characterized in that** the cap (5) comprises at least one first guide member (63) and the rotary encoder housing (4) comprises at least one corresponding second guide member (64), wherein, for fastening or loosening the cap (5), the first guide member (63) slides along the second guide member (64) in parallel.

4. Rotation angle measuring system according to one of the preceding claims, **characterized in that** in a state (100) attached to the rotary encoder housing (4), at least one area (51) of the cap (5) being arranged flush with the peripheral wall (43) and/or the base (44).

5. Rotation angle measuring system according to one of the preceding claims, **characterized in that** the cap (5) comprises a substantially two-dimensional first cap area (51) and a substantially box-shaped second cap portion (52).

6. Rotation angle measuring system according to claim 5, **characterized in that** in a state (100) attached to the rotary encoder housing (4), the second cap region (52) of the cap (5) protrudes laterally from the peripheral wall (43) and/or from the base (44).

7. Rotation angle measuring system according to one of claims 5 or 6, **characterized in that** in a state (100) attached to the rotary encoder housing (4), the second cap region (52) of the cap (5) at least partially radially surrounds the peripheral wall (43).

8. Rotation angle measuring system according to one of claims 5 to 7, **characterized in that** in a state (100) attached to the rotary encoder housing (4), the cap (5) comprises a channel (53) in the second cap area (52) through which a connecting cable (7) extends from an interior space (90) surrounding the rotary encoder housing (4) to an environment (91) located outside the rotary encoder housing (4).

9. Rotation angle measuring system according to one of the preceding claims, **characterized in that** the fixing device (55) is made of an electrically conductive material and, in a fixed state (100) of the cap (5) on the rotary encoder housing (4), an electrical connection between an electrical line (71, 72, 73, 74) of the connection cable (7) and the encoder housing (4) is established via the fixing device (55).

10. Rotation angle measuring system according to one of the preceding claims, **characterized in that** the opening (41) is formed eccentrically on at least one axial base end face (44) of the encoder housing (4) averted from the machine shaft (80) and extends into a radial circumferential area (43) of the rotary encoder housing (4) via a circumferential edge (45) of the encoder housing (4) averted from the machine shaft (80)

## Revendications

1. Système de mesure d'angle de rotation basé sur un aimant (1) pour détecter un mouvement de rotation d'un arbre de machine (80), comportant
une unité d'excitation (2) connectée de manière fixe en rotation à l'arbre de machine (80),
une unité de capteur (3) stationnaire interagissant fonctionnellement avec l'unité d'excitation (2), et
un carter de capteur rotatif (4) en forme de pot comportant une paroi périphérique cylindrique (43) et une base frontale (44) et entourant au moins l'unité de capteur (3) radialement, le carter de capteur rotatif (4) présentant une ouverture (41) additionnelle pouvant être fermée au moyen d'un capuchon séparé (5) de sorte qu'un espace intérieur dans la région de l'unité de capteur (3) est accessible de l'extérieur,
pour fermer l'ouverture (41), le capuchon (5) pouvant être fixé de manière amovible au carter de capteur rotatif (4) au moyen d'un dispositif de verrouillage (6),
**caractérisé en ce que**
le capuchon (5) comporte un dispositif de fixation (55) pour fixer un câble de connexion (7), le dispositif de fixation (55) comportant un élément de clip élastique ou un élément à ressort (56) pour précontraindre le câble de liaison (7) contre la paroi périphérique (43).

2. Système de mesure d'angle de rotation selon la revendication 1, **caractérisé en ce que** le dispositif de verrouillage (6) comporte au moins un premier élément de verrouillage (61) disposé sur le capuchon (5) et au moins un deuxième élément de verrouillage (62) disposé sur le carter de capteur rotatif (4), et le premier élément de verrouillage (61) peut être couplé de manière amovible avec le deuxième élément de verrouillage (62).

3. Système de mesure d'angle de rotation selon l'une des revendications 1 ou 2, **caractérisé en ce que** le capuchon (5) présente au moins un premier organe de guidage (63) et le carter de capteur rotatif (4) présente au moins un deuxième organe de guidage (64) correspondant, le premier élément de guidage (63) coulissant en parallèle le long du deuxième élément de guidage (64) pour la fixation ou le desserrage du capuchon (5).

4. Système de mesure d'angle de rotation selon l'une quelconque des revendications précédentes, **caractérisé en ce que** dans un état (100) fixé au carter de capteur rotatif (4), le capuchon (5) est disposé avec au moins une zone (51) affleurante avec la paroi périphérique (43) et/ou la base (44).

5. Système de mesure d'angle de rotation selon l'une quelconque des revendications précédentes, **caractérisé en ce que** le capuchon (5) présente une première zone de capuchon (51) sensiblement plate et une deuxième zone de capuchon (52) sensiblement en forme de boîte.

6. Système de mesure d'angle de rotation selon la revendication 5, **caractérisé en ce que** dans un état (100) fixé au carter de capteur rotatif (4), le capuchon (5) fait saillie latéralement de la paroi périphérique (43) et/ou de la base (44) par la deuxième zone de capuchon (52).

7. Système de mesure d'angle de rotation selon l'une des revendications 5 ou 6, **caractérisé en ce que** dans un état (100) fixé au carter de capteur rotatif (4), le capuchon (5) entoure au moins partiellement radialement la paroi périphérique (43) par la deuxième zone de capuchon (52).

8. Système de mesure d'angle de rotation selon l'une des revendications 5 à 7, **caractérisé en ce que** dans un état (100) fixé au carter de capteur rotatif (4), le capuchon (5) présente un canal (53) dans la deuxième zone de capuchon (52) à travers lequel s'étend un câble de connexion (7) d'un espace intérieur (90) entourant le carter de capteur rotatif (4) jusqu'à un environnement (91) situé à l'extérieur du carter de capteur rotatif (4).

9. Système de mesure d'angle de rotation selon l'une des revendications précédentes, **caractérisé en ce que** le dispositif de fixation (55) est fabriqué d'un matériau électriquement conducteur et, à l'état fixe (100) du capuchon (5) sur le carter de capteur rotatif (4), une connexion électrique entre une ligne électrique (71, 72, 73, 74) du câble de raccordement (7) et du carter de capteur (4) est établie via le dispositif de fixation (55).

10. Système de mesure d'angle de rotation selon l'une quelconque des revendications précédentes, **caractérisé en ce que** l'ouverture (41) est formée de manière excentrique dans au moins une face d'extrémité inférieure axiale (44) du carter de capteur (4) opposée à l'arbre de machine (80) et s'étend dans une zone circonférentielle radiale (43) du carter de capteur rotatif (4) via un bord circonférentiel (45) du carter de capteur (4) opposé à l'arbre de machine (80).
